(19) **Europäisches Patentamt / European Patent Office / Office européen des brevets**

(11) **EP 1 590 899 B1**

(12) **EUROPEAN PATENT SPECIFICATION**

(45) Date of publication and mention
of the grant of the patent:
**29.08.2007 Bulletin 2007/35**

(21) Application number: **04707858.9**

(22) Date of filing: **04.02.2004**

(51) Int Cl.:
**H04B 7/26** (2006.01)

(86) International application number:
**PCT/CA2004/000146**

(87) International publication number:
**WO 2004/070972 (19.08.2004 Gazette 2004/34)**

(54) **INTELLIGENT GAIN CONTROL IN AN ON-FREQUENCY REPEATER**

INTELLIGENTE VERSTÄRKUNGSREGLUNG IN EINEM ON-FREQUENZ-ZWISCHENVERSTÄRKER

COMMANDE DE GAIN INTELLIGENTE DANS UN REPETEUR SUR LA MEME FREQUENCE

(84) Designated Contracting States:
**DE FR GB**

(30) Priority: **06.02.2003 US 359096**

(43) Date of publication of application:
**02.11.2005 Bulletin 2005/44**

(73) Proprietor: **SPOTWAVE WIRELESS CANADA INC**
**Ottawa ON K2K 3C7 (CA)**

(72) Inventors:
• **ROPER, Mike**
**Kanata, Ontario K2K 1W7 (CA)**

• **ALLEN, Steve**
**Kanata, Ontario K2H 5E4 (CA)**
• **KELLETT, Colin**
**Ramsbury,**
**Marlborough-Wiltshire SN8 2QE (CA)**

(74) Representative: **Leeming, John Gerard**
**J.A. Kemp & Co.,**
**14 South Square,**
**Gray's Inn**
**London WC1R 5JJ (GB)**

(56) References cited:
**WO-A-02/071632          US-A- 5 095 528**
**US-A1- 2002 045 431**

**Description**

**TECHNICAL FIELD**

The present application relates to wireless access networks and, in particular, to a method and system for enabling Intelligent Gain Control (IGC) in an on-frequency repeater.

**BACKGROUND OF THE INVENTION**

On-frequency repeaters are known in the art, for amplifying an input signal without otherwise altering its frequency spectrum. In some cases, an on-frequency repeater may also employ various types of active circuitry in order to enhance the signal-to-noise (S/N) ratio, in addition to simply increasing the power level. A typical application of on-frequency repeaters is for improving wireless services within defined regions of a wireless network, where signal levels would otherwise be too low for satisfactory quality of service. For example, within a building, or a built-up urban area, signal attenuation, shadowing by buildings and/or hills; noise generated by various radio frequency sources, and multi-path effects can seriously degrade the quality of desired RF signals. In some cases, a wireless network provider may install a repeater in order to improve service in a region lying at an edge of the coverage area serviced by a base station, thereby effectively extending the reach of the base-station.

On-frequency repeaters are characterized by the fact that the input and output signals (in either the uplink or downlink path directions) have the same frequency. For the purposes of the present invention, the term "on-frequency repeater" shall be understood to refer to any amplifier system that has this characteristic, irrespective of whether the system is used as part of an wireless communications network, or in any other context. The external input signal received by the repeater (e.g. from a base station or a subscriber's wireless communications device - WCD) can be represented by:

$$Se = A \cdot Cos(\omega t + m(t)) \qquad\qquad\qquad (1)$$

Where A is the peak amplitude of the external input signal, ω is the carrier frequency and m(t) is the (frequency) modulation applied to the external input signal. In this case, the corresponding output signal radiated by the repeater can be represented by:

$$So = G \cdot A \cdot Cos(\omega(t - \delta) + m(t - \delta)) \qquad\qquad (2)$$

Where G is the repeater gain and δ is the time delay through the repeater at the carrier frequency ω.

It will be seen that the output signal (So) radiated by the repeater is a replica of the input signal received by the repeater, that has been amplified and subject to a time delay δ due to electrical delays within the repeater. Part of this delay is inherent to the amplification process, but is primarily caused by band-pass filters used in the repeater to prevent the unwanted amplification of signals outside the frequency band of interest. Generally this delay is inversely proportional to the bandwidth of the filters. The repeater gain (G) provides the increase in signal level that makes the repeater useful.

As will be appreciated, successful operation of the repeater requires that it provide sufficient system gain in each of the uplink and downlink paths to compensate for propagation losses in these paths. On the other hand, if the gain (in either the uplink or downlink paths) is too high, the repeater will radiate unnecessarily high signal power to mobile stations within its coverage area and/or the base station. In an environment in which there is more than one repeater in use, radiation of excessive signal power in the downlink path can cause interference (in the form of multiple overlapping coverage areas) with other subscribers. The same holds true for a single repeater radiating excessive power in the downlink path causing interference to other subscribers outside the intended coverage area of the repeater. Similarly, radiation of excessive signal power to the base-station may cause interference with other base-stations and/or other users of the wireless communications network.

Automatic Gain Controllers (AGCs) capable of controlling signal gain are known in the art. Typically, AGCs are implemented as analog RF or IF circuits, in which a variable gain amplifier (VGA) is used to amplify the analog RF signal. The VGA is normally controlled by a control signal derived from a measured signal parameter. In open-loop systems, the measured signal power is normally the output signal power, that is, the power level of the RF signal being supplied to an antenna for transmission. Thus, for example, in the downlink path (from the base station to the mobile station within the local coverage area) the power level of the downlink signal supplied to the coverage area antenna is monitored by a feed-back path and used to generate the VGA control signal. This arrangement enables the VGA to provide a variable gain, so that the effective radiated power (ERP) of the downlink RF signal is approximately constant, in spite of variations in the received power of the downlink RF signal from the base station. A directly analogous operation is also performed in the uplink path, so that the effective radiated power (ERP) of uplink RF signals transmitted to the base station will be approximately constant, even with wide variations in the received power of the downlink RF signal from the base station.

A limitation of this arrangement is that the signal power level measured at the repeater output represents the total power within the signal path, rather-than the power levels of desired traffic signals within it. In particular, the signal path will normally have a bandwidth of 25 MHz, or more, and will be contain multiple channels. In many wireless communications systems, such as Time Division Multiple Access (TDMA), Advanced Mobile Phone Service (AMPS) and Global System for Mobile Communnications (GSM), the signal power within the control channel(s) will remain approximately constant, but the power level in each of the data channels will fluctuate widely in accordance with variations in the signal traffic. However, the AGC cannot discriminate between a power level increase due to increased traffic in a data channel, and power level increases due to any other cause (such as an increase in the received signal power). In all cases, the AGC will respond to increased output power by reducing gain. Where the measured power level increase is due to increased data channel traffic, however, this produces the undesired result that the AGC has responded to increased data traffic by effectively attenuating the signal power.

US 2002/0045431 discloses an intelligent gain controller for an on-frequency repeater in which weak desired narrowband signals within a broadband signal path are detected to control the gain of a variable gain amplifier amplifying the broadband signal path.

Accordingly, a method and apparatus capable of intelligently controlling gain in an on-frequency repeater, at a moderate cost, remains highly desirable.

An object of the present invention is to provide an apparatus for intelligently controlling gain in an on-frequency repeater.

This object is met by the features of the invention defined in the appended independent claims. Further optional features are defined in the dependent claims.

Accordingly, an aspect of the present invention provides method for controlling a gain of an on-frequency repeater. According to the invention, a broadband radio frequency (RF) signal is received within a signal path of the repeater. A power level of a selected narrowband signal within the broadband RF signal is determined, and gain of the signal path controlled in accordance with the power level of the narrowband signal.

A further aspect of the present invention provides an intelligent gain controller (IGC) for an on-frequency repeater. The IGC includes a broadband gain controller (GC) for amplifying a broadband radio frequency (RF) signal within a broadband signal path of the repeater. A narrowband receiver isolates a narrowband signal within the broadband RF signal. A processor determines a power level of the narrowband signal, and controls the gain of the broadband GC in accordance with the determined power level.

The Intelligent gain controller of present invention operates by identifying and isolating a desired channel within the signal path, and then controls the gain of the signal path to maintain the ERP of the isolated channel substantially constant. Thus the present invention implements broadband gain control based on narrow band power levels of a desired channels within the signal path. This avoids the limitation of prior art AGC systems, in which path gain is controlled based on the total power level (of all of the traffic) within the signal path. Preferably, the IGC hunts for and isolates a control channel within the signal path as the desired channel for controlling gain of the signal path. This improves reliability by ensuring that signal path gain control is implemented using a channel that almost always carries a valid signal, even when little or no subscriber data traffic is being conveyed through the network.

Further features and advantages of the present invention will become apparent from the following detailed description, taken in combination with the appended drawings, in which:

Fig. 1 is a block diagram schematically illustrating principle elements of an exemplary Adaptive Personal Repeater in which the present invention may be deployed;

FIG. 2 is a block diagram schematically illustrating principle elements of an exemplary Intelligent Gain Controller (IGC) in accordance with an embodiment of the present invention;

FIG. 3 is a block diagram schematically illustrating principle elements of an exemplary downlink AGC usable in the IGC of FIG. 2; and

FIG. 4 is a block diagram schematically illustrating principal elements of exemplary narrow-band receiver and digital signal processor modules usable in the IGC of FIG. 2.

It will be noted that throughout the appended drawings, like features are identified by like reference numerals.

The following description utilizes exemplary power levels, power ranges, channel frequencies and band-widths in order to illustrate various features of the present invention. Those skilled in the art will appreciate, however, that the present invention is by no means limited to such values. On the contrary, those skilled in the art will readily understand that the present invention can be deployed for use in conjunction with any wireless communications network, and it is to be expected that the power levels, power ranges, channel frequencies, and band-widths stated herein will be modified to conform to the requirements of the communications network in question. Such modifications are considered to be well within the purview of those of ordinary skill in the art, and lie within the scope of the appended claims.

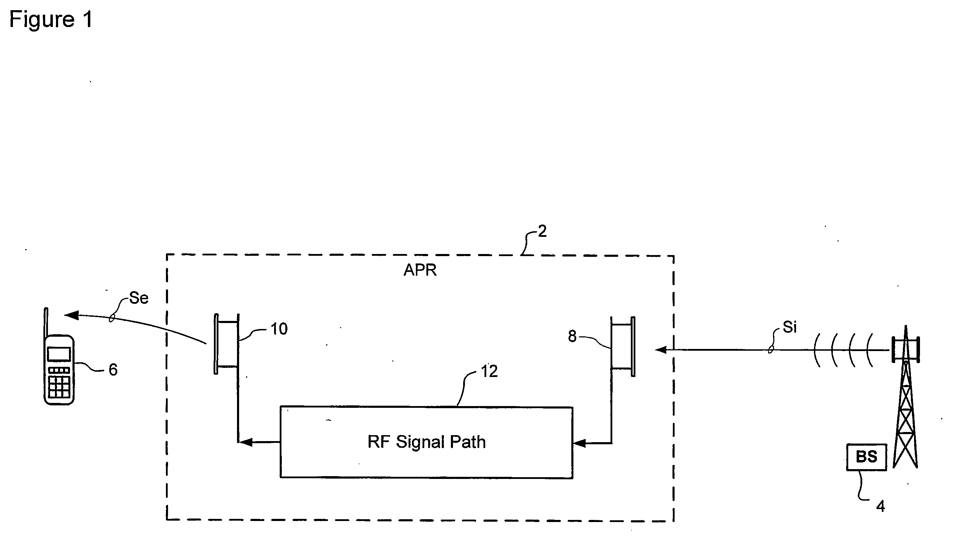

The present invention provides an Intelligent Gain Controller (IGC) for use in an on-frequency repeater. The IGC operates to control the gain of the repeater to facilitate reliable communications between the subscriber's wireless communications device(s) and the fixed station of the network, while mitigating potential interference. FIG. 1 is a block diagram schematically illustrating principle elements of an exemplary repeater in which the IGC of the present invention may be deployed.

As shown in FIG. 1, the repeater 2 is functionally positioned between a fixed station 4 of the wireless communications network (not shown) and a mobile station (MS) 6, such as a subscriber's Wireless Communications Device. The repeater 2 receives and controls (i.e., amplifies and/or attenuates) RF signal traffic between the fixed and mobile stations 4 and 6, without performing any signal formatting or protocol conversion, thereby rendering the repeater 2 transparent to both the fixed station 4 and the MS 6. The MS 6 may take the form of any conventional wireless communications device, such as, for example, Personal Digital Assistants (PDA's), wireless telephone handsets, pagers, and one and two-way wireless messaging devices.

It will be appreciated that multiple mobile stations 6 may be located within the coverage area of a single repeater 2. However, for ease of description of the invention, only a single MS 6 is shown.

In the embodiment of Fig. 1, the repeater 2 comprises a donor antenna 8 for receiving an input signal (Si) from the base station 4; a subscriber antenna 10 for radiating an output signal (So) to the MS 6; and a signal path 12 coupled between the donor and subscriber antennas 8 and 10 in order to amplify the input signal (Si) for retransmission as the output signal (So). If desired, the signal path 12 may include an Intermediate Frequency (IF) section (not shown in FIG. 1) to facilitate filtering, amplification, and other signal processing functions.

FIG. 1 shows a single RF signal path 12 coupled between the input antenna 8 and output antenna 10. This arrangement carries unidirectional downlink RF signal traffic from the base station 4 to the MS 6. Bi-directional signal traffic through the repeater 2, in order to convey uplink signal traffic from the MS 6 to the base station 4, can readily be accommodated by mirroring the system of FIG. 1, or by coupling respective uplink and downlink signal paths between the two antennas 8 and 10 via diplexers. Both of these solutions are well known in the art, and accordingly will not be described in greater detail herein.

In general, the bandwidth of the signal path 12 will be selected to encompass the range of frequencies that are expected to be used by the communications network within which the repeater will operate. For example, in North America, publicly accessible Advanced Mobile Phone Service (AMPS) and Time Division Multiple Access (TDMA) cellular communications networks typically utilize a 25MHz uplink and downlink path bandwidth centered on 836.5MHz and 881.5MHz, respectively. Glogal System for Mobile Communications (GSM) and Code Division Multiple Access (CDMA) networks utilize respective different bands, each having known bandwidth and center frequencies. In some cases, it will be desirable to make the bandwidth of the signal path 12 broad enough to encompass traffic of multiple different networks. In such cases, the signal path 12 may have a bandwidth of 60MHz, or more, and carry any one or more of AMPS/TDMA, GSM, CDMA and other traffic types.

The Intelligent gain controller of present invention operates by identifying and isolating a desired channel within the signal path 12, and then controls the gain of the signal path 12 to maintain the ERP of the isolated channel substantially constant. Thus the present invention implements broadband gain control based on narrow band power levels of a desired channels within the signal path 12. This avoids the limitation of prior art AGC systems, in which path gain is controlled based on the total power level (of all of the traffic) within the signal path. Preferably, the IGC hunts for and isolates a control channel within the signal path 12 as the desired channel for controlling gain of the signal path 12. This improves reliability by ensuring that signal path gain control is implemented using a channel that almost always carries a valid signal, even when little or no subscriber data traffic is being conveyed through the network.

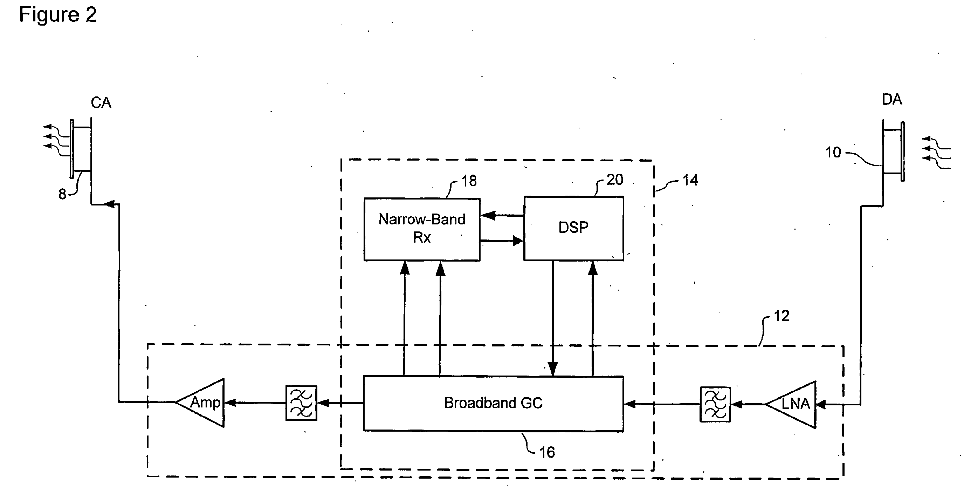

As shown in FIG. 2, the Intelligent Gain Controller (IGC) 14 includes a broadband gain controller 16 coupled within the signal path 12, and a narrow band receiver 18, both of which are controlled by a Digital Signal Processor 20 in accordance with an Adaptive Control Algorithm (ACA). The broadband gain controller 16 preferably provides substantially constant output leveling over a wide range of input power, across the full bandwidth of the signal path 12. The broadband gain controller 16 interfaces with the narrow band receiver 18, which operates under control of the DSP 20 to receive narrow band signals within the signal path 12. The DSP 20 operates under software control to identify desired "target" channel signaling within the signal path 12, and control the broadband gain controller 16 to adjust the gain of the signal path 12.

As mentioned previously with reference to FIG. 1, the embodiment illustrated in FIG. 2 is designed for processing unidirectional downlink traffic. In cases where IGC operation is desired in both directions, the system of FIG. 2 can be mirrored for the second (in this case, the uplink) path. Alternatively, both of the uplink and downlink paths can be coupled between diplexers (not shown), in a manner known in the art. In either case, only the broadband gain controller 16 and narrow band receiver 18 need be provided for each signal path 12. A single digital signal processor 20 can readily be implemented to provide the necessary control functionality to implement IGC operation for both paths. It is anticipated that those of ordinary skill in the art will be readily able to implement bi-directional IGC operation, based on the description provided herein. Accordingly, for the sake of brevity, a specific embodiment implementing bi-directional IGC operation will not be illustrated, or described further.

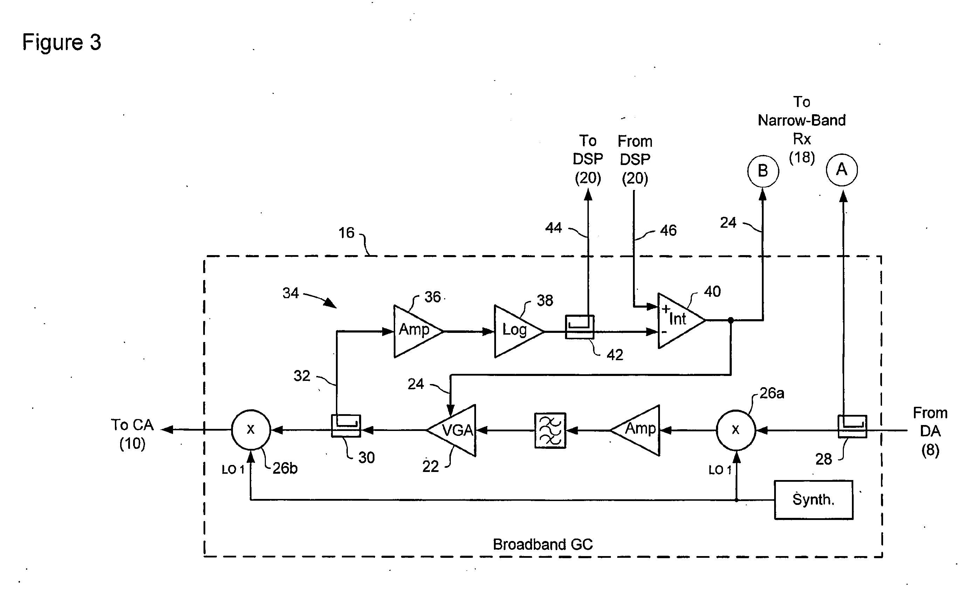

As shown in FIG. 3, the broadband gain controller 16 is preferably provided as a wide dynamic range, highly linear block comprising a variable gain amplifier (VGA) 22 controlled by a gain control signal 24. Preferably, conventional mixers 26a and 26b are provided at the upstream and downstream of the VGA 22, in order to downconvert received RF signal traffic to an intermediate (IF) frequency, and up-convert the amplified IF signal back to RF for transmission. An input directional coupler 28, which may be a 17 dB directional coupler, taps the signal path 12 at the input end of the broadband gain controller 16 in order to provide a sample of the received RF signal traffic to the narrowband receiver 18. An output directional coupler 30, which may also be a 17 dB directional coupler, samples the signal path 12 at the VGA 22 output. The output directional coupler 30 supplies a sample signal 32 to a feedback path 34 which includes a cascaded fixed gain amplifier 36 a log amplifier 38, and an integrator 40, which generates the gain control signal 24. The fixed gain and log amplifiers 36 and 38 operate to control the gain of the feedback path 34 in a manner known in the art. A coupler 42 samples the feedback path 34 at the output of the log amplifier 38, in order to supply a feedback path sample signal 44 to the DSP 20. The integrator 40 is preferably a conventional integrating amplifier, in which the inverting (-) input is connected to the output of the log amplifier 38. The non-inverting (+) input of the integrating amplifier 40 is coupled to receive a gain set signal 46 from the DSP 20. The output of the integrator 40 is supplied to the VGA 22 as the gain control signal 24, and the narrowband receiver 18.

With this arrangement, an increase in the signal power at the output of the VGA 22 will tend to cause the log amplifier 38 output to increase. With the gain set signal 46 from the DSP 20 held constant, this would cause the gain control signal 24 appearing at the integrator output to decrease, thereby lowering the gain of the VGA 22 (and thus the broadband signal path 12). Those of ordinary skill in the art will recognize that this operation (that is, with the gain set signal 46 held constant) is substantially equivalent to conventional AGC operation.. However, as will be described in greater detail below, the DSP 20 dynamically controls the level of the gain set signal 46, thereby perturbing this otherwise conventional AGC functionality.

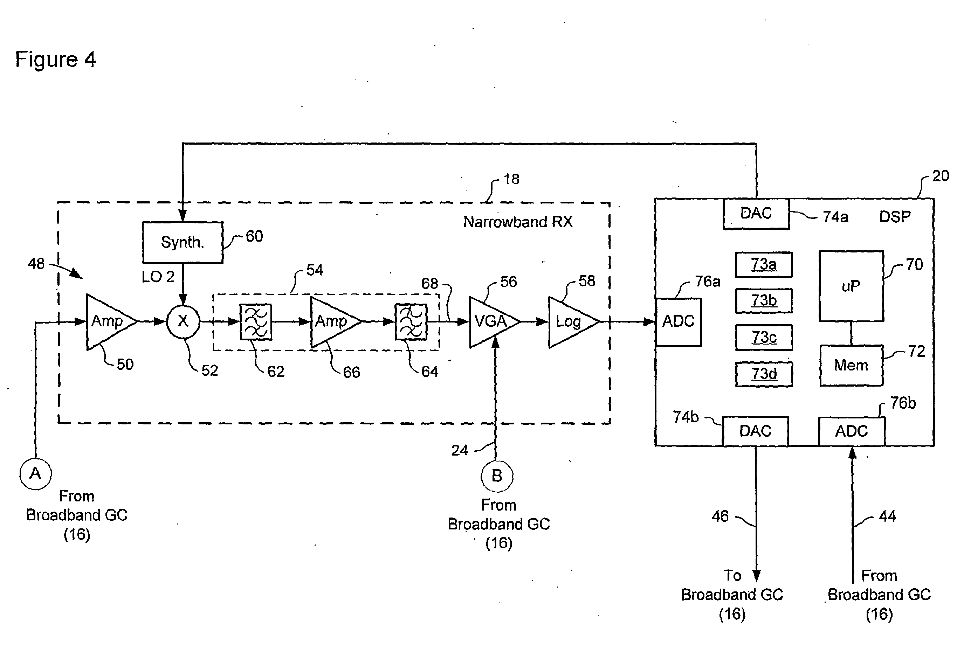

As shown in FIG. 4, the narrowband receiver 18 comprises a narrow band detection path 48 including a fixed gain amplifier 50, a mixer 52, an IF filter block 54, a variable gain amplifier 56 and a log amplifier 58. The fixed gain amplifier 50 is connected to receive the inbound RF signal traffic sampled by the input directional coupler 28 of the broadband gain controller 16 (see FIG. 3). The output of the fixed gain amplifier 50 is downconverted to an intermediate frequency (IF) by the mixer 52, using a local oscillator signal (LO 2) generated by a synthesizer 60. Preferably, the synthesizer 60 is controlled by the DSP 20, which enables the narrowband receiver 18 to be selectively tuned to receive any desired carrier frequency within the received RF signal traffic. The IF filter block 54 comprises a pair of band pass filters 62 and 64 cascaded with an amplifier 66, which operate to isolate and amplify signals within a narrow passband centered on the IF. The isolated narrowband signal 68 is then amplified by the variable gain amplifier (VGA) 56, in accordance with the gain control signal 24 generated by the integrator 40 of the broadband gain controller 16 (FIG. 3). This operation effectively scales the isolated signal 68 so that its magnitude is proportional to the power level of the corresponding signal at the output of the VGA 22 of the broadband gain controller 16. Thus, it will be seen that the gain of the narrowband path 48 is substantially equivalent to that of the broadband gain controller 16, so that the VGA 56 output provides a valid indicator of the power level of the corresponding signal at the output of the VGA 22 of the broadband gain controller 16 The VGA 56 output is then supplied to an input of the log amplifier 58, the output of which is coupled to the DSP 20.

The width of the passband of the IF filter block 54 is preferably selected in accordance with the expected bandwidth of a desired "target" channel within the received RF signal traffic. For example, control channel signaling within AMPS/TDMA traffic has a bandwidth of 30KHz, while GSM and CDMA signal traffic use channel bandwidths of 200KHz and 1.2MHz, respectively. Accordingly, in order to tune the narrowband receiver to identify an AMPS/TDMA channel, the passband of the IF filter block will be set to 30KHz. Similarly, the passband of the IF filter block will be set to 200KHz for GSM signal traffic, and 1.2MHz for CDMA signal traffic.

In operation, the synthesizer 60 is controlled by the DSP 20 to adjust the local oscillator signal (LO 2), such that a selected carrier frequency of the received broad-band signal is downconverted to the IF and then filtered by the IF filter block 54. The thus isolated signal 68 is then scaled by the VGA 56, and supled to the DSP 20 via the log amplifier 58. By suitably controlling the synthesizer 60, the local oscillator (LO 2) frequency can be progressively changed (either continuously or in a step-wise manner) to scan through the entire bandwidth of the broadband signal path 12. This enables the DSP 20 to hunt for, and locate any desired narrow-band signal within the received RF signal traffic.

As shown in FIG. 4, the DSP 20 primarily includes a micro-processor 70 coupled to a memory 72 (which may include any suitable combination of volatile and non-volatile memory) for storing software and operating data. Additional digital signal processing circuit blocks 73 (such as, for example, digital filters, shift registers, comparators, digital demodulators, correlators etc) may also be included in the DSP. One or more Digital-to-Analog converters (DACs) 74 and Analog-to-Digital Converters (ADCs) 76 operate in a manner well known in the art to enable interaction between the DSP 20 and other elements of the IGC 14. An internal bus system (not shown) is controlled by the micro-processor 70 in a manner well known in the art to route digital signals between each of the elements of the DSP 20. Thus, for example, the log amplifier 58 supplies the isolated narrowband signal to an ADC 76a of the DSP 20. The ADC 76a samples the narrowband signal, at a predetermined sample rate, to generate a sequence of digital sample values which are representative of the instantaneous power level of the Log amplifier output. This enables the DSP 20 to sample the power level of the isolated narrowband signal, and use this information for decision making and gain control, as will be described later. In addition, by suitably selecting the sample rate of the ADC (e.g. to satisfy the Nyquist's theorem) the digital sample values generated by the ADC 76a will contain sufficient information to enable complete reconstruction of the isolated narrowband signal. This enables the DSP to digitally demodulate the narrowband signal to provide carrier identification, as will be described in greater detail below.

In general, the micro-processor 70 operates under control of software implementing an adaptive control algorithm, to identify a desired target channel within the received broadband RF signal traffic, and then control the gain of the signal path 12 in accordance with the power level of the identified channel. This functionality can be implemented in various ways. For the purposes of illustration, two primary variations are described below.

In a first variation, the bandwidth of the signal path 12 is limited to encompass traffic of a single network service. Thus, for example, in an AMPS/TDMA network, a bandpass filter of the signal path 12 may be provided to limit the path bandwidth to 25MHz. All of the traffic of that network is assumed to be conveyed with the 25MHz wide pass band, and no other network services are present (within that band). As a result, only one control channel (30KHz wide in the case of AMPS/TDMA) will be present within the received broadband RF signal, although its location may not be known in advance. The control channel can be identified, however, by the fact that it is persistent, whereas the data channels will tend to be highly variable over time.

In this scenario, the DSP 20 can control the narrowband receiver 18 to progressively scan across the 25MHz bandwidth of the signal path 12 (i.e. to sample the RF signal at multiple closely spaced carrier frequencies), and record sampled power levels as a function of frequency. This enables the DSP 20 to identify each of the channel frequencies within the received RF signal. If desired, the DSP 20 can then terminate progressive scanning across the entire 25MHz bandwidth, in favor of stepping between channel frequencies. This enables each channel frequency to be sampled at regular intervals, without wasting resources sampling the noise between adjacent channels. By sampling and storing power levels for each channel frequency over a period of time, the channel showing the least amount of power level variation can be identified as the target (control) channel.

Once the control channel has been identified, the DSP 20 can then calculate the value of the gain set signal 46, so as to control the VGA 22 of the Broadband gain controller 16. By this means, the DSP 20 can control the gain of the broad band signal path 12 using the power level of the isolated control channel. Preferably, the DSP 20 iteratively recalculates the value of the gain set signal 46 so as to hold the power of the isolated control channel at a substantially constant level. Various known calculation algorithms may be implemented to accomplish this function.

In a second variation, the bandwidth of the signal path 12 is broad enough to encompass traffic of two or more network services. For example, the bandwidth of the signal path 12 may be as wide as 60MHz or more, and the received RF signal may include any arbitrary mix of TDMA/AMPS, GSM and CDMA traffic. Furthermore, any of this traffic may be sourced from two or more network service providers. As a result, multiple control channels will be present within the received RF traffic, and their locations within the broadband signal may not be known in advance. However, the network service of the desired control channel will be known in advance. As a result, the pass-band width of the IF filter block 54 of the narrowband receiver 18 can be selected (e.g. to 30KHz, 200KHz or 1.2MHz), and this will enable the system to discriminate between AMPS/TDMA, GSM and CDMA traffic. However, it may still be necessary to discriminate between two or more control channels. For example, two network service providers may be sourcing GSM traffic, and it may be desirable to be identify and use only the control channel sourced from a predetermined one of them. In this case, however, each control channel will contain a respective Network Identifier Code (NIC) which uniquely identifies the respective service provider.

In this scenario, the DSP 20 can control the narrowband receiver 18 to progressively scan across the entire bandwidth of the signal path 12 to sample the RF signal at multiple closely spaced carrier frequencies. At each carrier frequency, the isolated "candidate" narrowband signal is digitally demodulated by the DSP 20 and examined for the presence of the network identifier code (NIC) of the desired service provider. Examination of the digitally demodulated narrowband signal can be accomplished using known methods, such as, for example, latching the demodulated signal through a shift register 73 and comparing the shift register contents to the previously known NIC. In the case of CDMA traffic, a correlator block 73 of the DSP 20 can be used in a known manner to identify the NIC within the digitally demodulated narrowband signal. When the NIC is located, the respective candidate signal is selected as the desired control channel, and thereafter used to calculate the value of the gain set signal 46, so as to control the VGA 22 of the Broadband gain controller 16, as described above.

The embodiment(s) of the invention described above is(are) intended to be exemplary only. The scope of the invention is therefore intended to be limited solely by the scope of the appended claims.

**Claims**

1. A method for controlling a gain of an on-frequency repeater (2), the method comprising steps of:

   receiving a broadband radio frequency signal within a broadband signal path (12) of the repeater;
   determining a power level of a selected narrowband signal within the received broadband RF signal; and
   controlling gain of the broadband signal path (12) based on the power level of the narrowband signal;
   wherein the selected narrowband signal is a control channel of a selected network service.

2. A method as claimed in claim 1 wherein the step of determining the power level of the selected narrowband signal comprises steps of:

   identifying a target narrowband signal within the broadband RF signal; and
   determining the power level of the identified narrowband signal.

3. A method as claimed in claim 2 wherein the step of identifying the target narrowband signal comprises steps of:

   isolating a plurality of candidate narrowband signals; and
   selecting, from the plurality of candidate narrowband signals, the candidate narrowband signal having a least amount of power level variation as the target narrowband signal.

4. A method as claimed in claim 2 wherein the step of identifying the narrowband signal comprises steps of:

   isolating a plurality of candidate narrowband signals; and
   selecting the narrowband signal from the plurality of candidate narrowband signals based on a predetermined network identification code within the narrowband signal.

5. A method as claimed in claim 2 wherein the step of identifying the narrowband signal comprises steps of:

   isolating a plurality of candidate narrowband signals; and
   selecting the narrowband signal from the plurality of candidate narrowband signals based on a predetermined format of the narrowband signal.

6. A method as claimed in claim 5 wherein the predetermined format is chosen from a list comprising: time domain multiple access (, code domain multiple access, and frequency domain multiple access.

7. An on-frequency repeater (2) comprising:

   a broadband signal path (12) comprising a broadband gain controller (16) for amplifying a broadband radio frequency signal;
   a narrowband receiver (18) for isolating a selected narrowband signal within the broadband RF signal; and
   a processor (20) for determining a power level of the received narrowband signal, and controlling the gain of the broadband gain controller (16) based on the determined power level;
   wherein the selected narrowband signal is a control channel of a selected network service.

8. An on-frequency repeater as claimed in claim 7 wherein the processor (20) is adapted to control the narrowband receiver (18) to select a frequency of the narrowband signal.

9. An on-frequency repeater as claimed in claim 8 wherein the processor (20) is further adapted to select the narrowband signal from among a plurality of candidate narrowband signals, each candidate narrowband signal having a respective different frequency.

**10.** An on-frequency repeater as claimed in claim 9, wherein the processor (20) comprises a memory (72) for storing a respective determined power level for each candidate narrowband signal, and wherein the narrowband signal is selected based on the respective stored power levels of the candidate narrow band signals.

**11.** An on-frequency repeater as claimed in claim 10, wherein the memory (72) is adapted to store a respective plurality of successive determined power levels for each candidate narrowband signal.

**12.** An on-frequency repeater as claimed in claim 11, wherein the processor (20) is adapted to determine power levels of each candidate narrowband signal over a period of time, based on the respective plurality of successive determined power levels, and wherein the processor (20) is adapted to select the candidate narrowband signal having the least amount of power level variation.

**13.** An on-frequency repeater as claimed in claim 9, wherein the processor (20) is further adapted to:

digitally demodulate at least a portion of each candidate narrowband signal;
select the candidate narrowband signal for which the digitally demodulated portion contains a predetermined network identification code (NIC).

**14.** An on-frequency repeater as claimed in claim 7 wherein the narrowband receiver (18) comprises:

a mixer (52) for down converting the broadband RF signal;
an intermediate filter stage (54) for selecting the narrowband signal from the broadband RF signal; and
a narrowband variable gain amplifier (56) for amplifying the narrowband signal in accordance with the gain of the broadband gain control.

**15.** An on-frequency repeater as claimed in claim 14 wherein the broadband gain controller (16) comprises:

a first mixer (26a) for down converting the broadband RF signal to a baseband signal;
a variable gain amplifier (22) for amplifying the baseband signal;
an automatic gain control loop (36-42) adapted to generate a gain control signal (24) for controlling a gain of the variable gain amplifier (22); and
a second mixer (26a) for up converting the baseband signal to an output radio frequency signal.

**16.** An on-frequency repeater as claimed in claim 15 wherein the broadband gain controller (16) further comprises a broadband select filter.

**17.** An on-frequency repeater as claimed in claim 15 wherein the automatic gain control loop (36-42) comprises an integrator (40) for generating the gain control signal based on an automatic gain control feed back signal and a gain set signal (46) from the processor (20).

**Patentansprüche**

**1.** Verfahren zum Steuern einer Verstärkung eines Einschaltfrequenz-Repeater (2), mit folgenden Schritten:

Empfangen eines Breitband-Radiofrequenzsignals innerhalb eines Breitband-Signalwegs (12) des Repeater;
Ermitteln eines Energiepegels eines ausgewählten Schmalbandsignals innerhalb des empfangenen Breitband-RF-Signals; und
Steuern der Verstärkung des Breitband-Signalwegs (12) anhand des Energiepegels des Schmalbandsignals;
wobei das ausgewählte Schmalbandsignal ein Steuerkanal eines ausgewählten Netzwerkdienstes ist.

**2.** Verfahren nach Anspruch 1, bei dem der Schritt des Ermittelns des Energiepegels des ausgewählten Schmalbandsignals folgende Schritte umfasst:

Identifizieren eines Target-Schmalbandsignals innerhalb des Breitband-RF-Signals; und
Ermitteln des Energiepegels des identifizierten Schmalbandsignals.

**3.** Verfahren nach Anspruch 2, bei dem der Schritt des Identifizierens des Target-Schmalbandsignals folgende Schritte umfasst:

Isolieren mehrerer Schmalbandsignal-Kandidaten; und
Auswählen des Schmalbandsignal-Kandidaten mit der kleinsten Energiepegelschwankung aus den mehreren Schmalbandsignal-Kandidaten als Target-Schmalbandsignal.

4. Verfahren nach Anspruch 2, bei dem der Schritt des Identifizierens des Schmalbandsignals folgende Schritte umfasst:

Isolieren mehrerer Schmalbandsignal-Kandidaten; und
Auswählen des Schmalbandsignals aus den mehreren Schmalbandsignal-Kandidaten anhand eines vorbestimmten Netzwerk-Identifikationscodes innerhalb des Schmalbandsignals.

5. Verfahren nach Anspruch 2, bei dem der Schritt des Identifizierens des Schmalbandsignals folgende Schritte umfasst:

Isolieren mehrerer Schmalbandsignal-Kandidaten; und
Auswählen des Schmalbandsignals aus den mehreren Schmalbandsignal-Kandidaten anhand eines vorbestimmten Formats des Schmalbandsignals.

6. Verfahren nach Anspruch 5, bei dem das vorbestimmte Format aus einer Liste ausgewählt ist, die umfasst: Zeitbereichs-Mehrfachzugriff, Codebereichs-Mehrfachzugriff und Frequenzbereichs-Mehrfachzugriff.

7. Einschaltfrequenz-Repeater (2) mit:

einem Breitband-Signalweg (12) mit einem Breitband-Verstärkungs-Controller (16) zum Verstärken eines Breitband-Radiofrequenzsignals;
einem Schmalbandempfänger (18) zum Isolieren eines ausgewählten Schmalbandsignals innerhalb des Breitband-RF-Signals; und
einem Prozessor (20) zum Ermitteln eines Energiepegels des empfangenen Schmalbandsignals und zum Steuern der Verstärkung des Breitband-Verstärkungs-Controller (16) anhand des ermittelten Energiepegels;
wobei das ausgewählte Schmalbandsignal ein Steuerkanal eines ausgewählten Netzwerkdienstes ist.

8. Einschaltfrequenz-Repeater nach Anspruch 7, bei dem der Prozessor (20) zum Steuern des Schmalbandempfängers (18) zwecks Auswählens einer Frequenz des Schmalbandsignals vorgesehen ist.

9. Einschaltfrequenz-Repeater nach Anspruch 8, bei dem der Prozessor (20) ferner zum Auswählen des Schmalbandsignals aus den mehreren Schmalbandsignal-Kandidaten vorgesehen ist, wobei jeder Schmalbandsignal-Kandidat jeweils eine andere Frequenz aufweist.

10. Einschaltfrequenz-Repeater nach Anspruch 9, bei dem der Prozessor (20) einen Speicher (72) zum Speichern jeweils eines vorbestimmten Energiepegels für jeden Schmalbandsignal-Kandidaten aufweist und bei dem das Schmalbandsignal anhand der jeweiligen gespeicherten Energiepegel der Schmalbandsignal-Kandidaten ausgewählt wird.

11. Einschaltfrequenz-Repeater nach Anspruch 10, bei dem der Speicher (72) zum Speichern jeweils mehrerer sukzessiver vorbestimmter Energiepegel für jeden Schmalbandsignal-Kandidaten vorgesehen ist.

12. Einschaltfrequenz-Repeater nach Anspruch 11, bei dem der Prozessor (20) zum Ermitteln der Energiepegel jedes Schmalbandsignal-Kandidaten über einen Zeitraum anhand der jeweiligen mehreren sukzessiven vorbestimmten Energiepegel vorgesehen ist und bei dem der Prozessor (20) zum Auswählen des Schmalbandsignal-Kandidaten mit der kleinsten Energiepegelschwankung vorgesehen ist.

13. Einschaltfrequenz-Repeater nach Anspruch 9, bei dem der Prozessor (20) ferner vorgesehen ist zum:

digitalen Demodulieren mindestens eines Teils jedes Schmalbandsignal-Kandidaten;
Auswählen des Schmalbandsignal-Kandidaten, für den der digital demodulierte Teil einen vorbestimmten Netzwerk-Identifikationscode (NIC) enthält.

**14.** Einschaltfrequenz-Repeater nach Anspruch 7, bei dem der Schmalbandempfänger (18) aufweist:

einen Mischer (52) zum Abwärtskonvertieren des Breitband-RF-Signals;
eine Zwischenfilterstufe (54) zum Auswählen eines Schmalbandsignals aus dem Breitband-RF-Signal; und
einen Schmalband-Verstärker (56) mit variabler Verstärkung zum Verstärken des Schmalbandsignals entsprechend der Verstärkung der Breitband-Verstärkungssteuerung.

**15.** Einschaltfrequenz-Repeater nach Anspruch 14, bei dem der Breitband-Verstärkungs-Controller (16) aufweist:

einen ersten Mischer (26a) zum Abwärtskonvertieren des Breitband-RF-Signals zu einem Basisbandsignal;
einen Verstärker (22) mit variabler Verstärkung zum Verstärken des Basisbandsignals;
eine automatische Verstärkungssteuerschleife (36-42) zum Erzeugen eines Verstärkungssteuersignals (24) zwecks Steuerns einer Verstärkung des Verstärkers (22) mit variabler Verstärkung; und
einen zweiten Mischer (26b) zum Aufwärtskonvertieren des Basisbandsignals zu einem Ausgangs-Radiofrequenzsignal.

**16.** Einschaltfrequenz-Repeater nach Anspruch 15, bei dem der Breitband-Verstärkungs-Controller (16) ferner ein Breitband-Auswahlfilter aufweist.

**17.** Einschaltfrequenz-Repeater nach Anspruch 15, bei dem die automatische Verstärkungssteuerschleife (36-42) einen Integrator (40) zum Erzeugen des Verstärkungssteuersignals anhand eines Rückführsignals der automatischen Verstärkungssteuerung und eines Verstärkungseinstellsignals (46) von dem Prozessor (20) aufweist.


## Revendications

**1.** Procédé de commande de gain d'un répéteur sur la même fréquence (2), le procédé comprenant les étapes consistant à :

recevoir un signal radioélectrique à large bande à l'intérieur d'un chemin de signal à large bande (12) du répéteur ;
déterminer un niveau de puissance d'un signal à bande étroite sélectionné à l'intérieur du signal radioélectrique à large bande reçu ; et
commander le gain du chemin de signal à large bande (12) sur la base du niveau de puissance du signal à bande étroite ;
dans lequel le signal à bande étroite sélectionné est un canal de signalisation d'un service de réseau sélectionné.

**2.** Procédé selon la revendication 1, dans lequel l'étape consistant à déterminer le niveau de puissance du signal à bande étroite sélectionné comprend les étapes consistant à :

identifier un signal à bande étroite cible à l'intérieur du signal radioélectrique à large bande ; et
déterminer le niveau de puissance du signal à bande étroite identifié.

**3.** Procédé selon la revendication 2, dans lequel l'étape consistant à identifier le signal à bande étroite cible comprend les étapes consistant à :

isoler une pluralité de signaux à bande étroite candidats ; et
sélectionner, à partir de la pluralité de signaux à bande étroite candidats, le signal à bande étroite candidat qui présente la moindre quantité de variation du niveau de puissance, en tant que signal à bande étroite cible.

**4.** Procédé selon la revendication 2, dans lequel l'étape consistant à identifier le signal à bande étroite comprend les étapes consistant à :

isoler une pluralité de signaux à bande étroite candidats ; et
sélectionner le signal à bande étroite à partir de la pluralité de signaux à bande étroite candidats sur la base d'un code d'identification de réseau prédéterminé à l'intérieur du signal à bande étroite.

**5.** Procédé selon la revendication 2, dans lequel l'étape consistant à identifier le signal à bande étroite comprend les étapes consistant à :

isoler une pluralité de signaux à bande étroite candidats ; et

sélectionner le signal à bande étroite à partir de la pluralité de signaux à bande étroite candidats sur la base d'un format prédéterminé du signal à bande étroite.

6. Procédé selon la revendication 5, dans lequel le format prédéterminé est choisi dans une liste comprenant : accès multiple par répartition dans le temps, accès multiple par répartition de code, et accès multiple par répartition de fréquence.

7. Répéteur sur la même fréquence (2) comprenant :

un chemin de signal à large bande (12) comprenant un contrôleur de gain à large bande (16) pour amplifier un signal radioélectrique à large bande ;

un récepteur à bande étroite (18) pour isoler un signal à bande étroite sélectionné à l'intérieur du signal radioélectrique à large bande ; et

un processeur (20) pour déterminer le niveau de puissance du signal à bande étroite reçu, et commander le gain du contrôleur de gain à large bande (16) sur la base du niveau de puissance déterminé ;

dans lequel le signal à bande étroite sélectionné est un canal de signalisation d'un service de réseau sélectionné.

8. Répéteur sur la même fréquence selon la revendication 7, dans lequel le processeur (20) est adapté pour contrôler le récepteur à bande étroite (18) pour sélectionner une fréquence du signal à bande étroite.

9. Répéteur sur la même fréquence selon la revendication 8, dans lequel le processeur (20) est adapté de plus pour sélectionner le signal à bande étroite parmi une pluralité de signaux à bande étroite candidats, chaque signal à bande étroite candidat présentant une fréquence différente respective.

10. Répéteur sur la même fréquence selon la revendication 9, dans lequel le processeur (20) comprend une mémoire (72) pour stocker un niveau de puissance déterminé respectif pour chaque signal à bande étroite candidat, et dans lequel le signal à bande étroite est sélectionné sur la base des niveaux de puissance stockés respectifs des signaux à bande étroite candidats.

11. Répéteur sur la même fréquence selon la revendication 10, dans lequel la mémoire (72) est adaptée pour stocker une pluralité respective de niveaux de puissance déterminés successifs pour chaque signal à bande étroite candidat.

12. Répéteur sur la même fréquence selon la revendication 11, dans lequel le processeur (20) est adapté pour déterminer les niveaux de puissance de chaque signal à bande étroite candidat pendant une période de temps, sur la base de la pluralité respective de niveaux de puissance déterminés successifs, et dans lequel le processeur (20) est adapté pour sélectionner le signal à bande étroite candidat présentant la moindre quantité de variation de niveau de puissance.

13. Répéteur sur la même fréquence selon la revendication 9, dans lequel le processeur (20) est adapté de plus pour :

démoduler de manière numérique au moins une partie de chaque signal à bande étroite candidat ;

sélectionner le signal à bande étroite candidat pour lequel la partie démodulée de manière numérique contient un code d'identification de réseau (NIC) prédéterminé.

14. Répéteur sur la même fréquence selon la revendication 7, dans lequel le récepteur à bande étroite (18) comprend :

un mélangeur (52) pour transposer par abaissement de fréquence le signal radioélectrique à large bande ;

un étage de filtre intermédiaire (54) pour sélectionner le signal à bande étroite à partir du signal radioélectrique à large bande ; et

un amplificateur à gain variable à bande étroite (56) pour amplifier le signal à bande étroite selon le gain de la commande de gain à large bande.

15. Répéteur sur la même fréquence selon la revendication 14, dans lequel le contrôleur de gain à large bande (16) comprend :

un premier mélangeur (26a) pour transposer par abaissement de fréquence le signal radioélectrique à large bande en un signal en bande de base ;

un amplificateur à gain variable (22) pour amplifier le signal en bande de base ;

une boucle de commande automatique de gain (36 - 42) adaptée pour générer un signal de commande de gain (24) pour commander le gain de l'amplificateur à gain variable (22) ; et

un second mélangeur (26a) pour transposer par élévation de fréquence le signal en bande de base en un signal radioélectrique de sortie.

16. Répéteur sur la même fréquence selon la revendication 15, dans lequel le contrôleur de gain à large bande (16) comprend de plus un filtre de sélection à large bande.

17. Répéteur sur la même fréquence selon la revendication 15, dans lequel la boucle de commande automatique de gain (36 - 42) comprend un intégrateur (40) pour générer le signal de commande de gain sur la base d'un signal de rétroaction de commande automatique de gain et d'un signal de réglage de gain (46) provenant du processeur (20).

EP 1 590 899 B1

Figure 1

Figure 2

EP 1 590 899 B1

Figure 3

## Figure 4

Narrowband RX (18)

Synth. — 60

LO 2

48

Amp — 50

X — 52

54

62

Amp — 66

68

64

VGA — 56

Log — 58

A
From
Broadband GC
(16)

24

B
From
Broadband GC
(16)

DSP (20)

DAC — 74a

73a
73b
73c
73d

ADC — 76a

uP — 70

Mem — 72

DAC — 74b

ADC — 76b

46

To
Broadband GC
(16)

44

From
Broadband GC
(16)

EP 1 590 899 B1

16

**EP 1 590 899 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020045431 A